# FASCICULE DE BREVET EUROPEEN

(11) **EP 0 848 547 B1**
(45) Date de publication et mention de la délivrance du brevet: **04.05.2005**
(21) Numéro de dépôt: 97203788.1
(22) Date de dépôt: 03.12.1997
(51) Int. Cl.: H04N 5/16

(54) **Circuit d'interface pour caméra vidéo**
Schnittstellenschaltung für Videokamera
Interface circuit for video camera

(30) Priorité: 13.12.1996 FR 9615372
(43) Date de publication de la demande: 17.06.1998
(73) Titulaire: Koninklijke Philips Electronics N.V., 5621 BA Eindhoven (NL)
(72) Inventeur: Darthenay, Frédéric, 75008 Paris (FR); Morisson, Richard, 75008 Paris (FR)
(74) Mandataire: Charpail, François

(56) Documents cités:
- EP-A- 0 064 316
- EP-A- 0 280 123
- EP-A- 0 625 849
- FR-A- 2 535 566
- GB-A- 2 071 959
- US-A- 5 329 312

## Description

La présente invention concerne un circuit d'interface muni d'une entrée destinée à recevoir un signal d'entrée pseudo-périodique dont chaque pseudo-période comprend au moins un premier et un deuxième intervalles de temps consécutifs, signal d'entrée présentant un niveau dit de référence pendant le premier intervalle de temps et un niveau dit vidéo pendant le deuxième intervalle de temps, et d'une sortie destinée à délivrer un signal dont le niveau est représentatif de la différence entre le niveau de référence et le niveau vidéo pris par le signal d'entrée au cours d'une même pseudo-période, circuit d'interface comprenant :
. une première et une deuxième branches d'échantillonnage, chacune constituée de suiveurs/bloqueurs disposés en série, chacun muni d'une entrée et d'une sortie, chaque branche présentant une entrée et une sortie constituées respectivement par l'entrée de son premier suiveur/bloqueur et la sortie de son dernier suiveur/bloqueur, la première branche contenant un suiveur/bloqueur de plus que la deuxième, l'entrée de chaque branche recevant le signal d'entrée du circuit d'interface,
. un soustracteur muni d'une première entrée reliée à la sortie de la première branche, d'une deuxième entrée reliée à la sortie de la deuxième branche, et d'une sortie constituant la sortie du circuit d'interface,
. une boucle de régulation de niveau continu comportant une première capacité insérée entre l'entrée de l'une des branches et l'entrée du circuit d'interface, et un premier comparateur muni d'une première entrée reliée à la sortie de l'une des branches d'échantillonnage, d'une deuxième entrée destinée à recevoir un signal de régulation ayant une valeur prédéterminée, et d'une sortie destinée à commander la conduction d'un courant au travers de la première capacité.

Le document GB-A-2 071 959 décrit un circuit d'interface pour un CCD, avec deux branches d'echantillonage-blocage. L'une avec deux stages, l'autre avec un stage. Un soustracteur reçoit les signaux aux sorties des deux branches.

Les circuits d'interface couramment utilisés pour réaliser la fonction décrite dans le paragraphe introductif comportent deux boucles de régulation, la première régulant la composante continue du signal d'entrée pendant le premier intervalle de temps, c'est-à-dire lorsque le signal d'entrée présente le niveau de référence, la deuxième régulant la composante continue du signal d'entrée pendant le deuxième intervalle de temps, c'est-à-dire lorsque le signal d'entrée présente le niveau vidéo. Le signal présent à la sortie de la première branche, dont la valeur est représentative du niveau de référence, est comparé à une première valeur prédéterminée et ajuste, pendant le premier intervalle de temps, la tension aux bornes d'une capacité placée entre l'entrée de la première branche et l'entrée du circuit d'interface. Le signal présent à la sortie de la deuxième branche, dont la valeur est représentative du niveau vidéo, est comparé à une deuxième valeur prédéterminée et ajuste, pendant le deuxième intervalle de temps, la tension aux bornes d'une capacité placée entre l'entrée de la deuxième branche et l'entrée du circuit d'interface. Ces deux boucles de régulation ont nécessairement des temps de réaction similaires, puisqu'elles doivent toutes deux agir au cours de chaque pseudo-période. Ainsi la correction réalisée par la première boucle de régulation peut modifier la valeur de la tension aux bornes de la capacité de la deuxième boucle de régulation et réciproquement. Dans des applications hautes fréquences où la pseudo-période du signal d'entrée du circuit d'interface est très brève, le temps de réaction de chacune des deux boucles doit être très faible. L'interaction décrite ci-dessus peut alors causer des oscillations des composantes continues des signaux présents aux entrées des branches d'échantillonnage qui sont néfastes au fonctionnement du circuit d'interface.

La présente invention a pour but de remédier à cet inconvénient, en proposant un circuit d'interface dans lequel les deux branches d'échantillonnage reçoivent sur leurs entrées un même signal dont la composante continue est régulée au moyen d'une seule boucle de régulation.

En effet, un circuit d'interface selon l'invention est caractérisé en ce que les entrées des première et deuxième branches sont reliées ensemble, formant un noeud commun relié via la première capacité à l'entrée du circuit d'interface, et en ce qu'il comporte en outre des moyens de contrôle insérés entre les branches d'échantillonnage et le soustracteur, et activés si les niveaux des signaux présents aux sorties des première et deuxième branches correspondent au niveau de référence, moyens de contrôle permettant d'ajuster les valeurs des signaux présents aux entrées du soustracteur afin que les dites valeurs soient égales.

Dans un tel circuit d'interface, la boucle de régulation et les moyens de contrôle n'agissent pas directement sur les mêmes signaux, ce qui permet de limiter les risques que des oscillations se produisent. De plus, si le temps de réaction de la boucle de régulation est nécessairement faible, car une régulation de la composante continue du signal d'entrée des branches d'échantillonnage doit être effectuée à chaque pseudo-période du signal d'entrée du circuit d'interface, le temps de réaction des moyens de contrôle peut être plus important, car ceux-ci n'agissent que dans les cas où le niveau vidéo du signal d'entrée de l'interface correspond au niveau de référence. La différence entre les temps de réaction des deux boucles limite d'autant plus les risques d'interaction entre celles-ci.

Un mode de réalisation de l'invention présente un circuit d'interface tel que décrit ci-dessus, caractérisé en ce que les moyens de contrôle comportent :
. un deuxième comparateur muni d'une première et d'une deuxième entrées respectivement reliées aux sorties des première et deuxième branches d'échantillonnage, et d'une sortie reliée via une deuxième capacité à une borne de tension fixe, et
. un module dit de décalage, muni d'une entrée de signal reliée à la sortie de l'une des branches d'échantillonnage, d'une sortie de signal reliée à l'une des entrées du soustracteur dont l'autre entrée est reliée à la sortie de l'autre branche d'échantillonnage, le module de décalage étant en outre muni d'une entrée de commande reliée à la sortie du deuxième comparateur et étant destiné à générer, entre son entrée de signal et sa sortie de signal, une différence de potentiel dont la valeur dépend de la valeur du signal reçu sur l'entrée de commande.

Dans un tel circuit d'interface, une différence entre les valeurs des composantes continues des signaux de sortie des branches d'échantillonnage est détectée au moyen du deuxième comparateur et immédiatement corrigée grâce au module de décalage, lequel peut être réalisé sous diverses formes.

Dans un mode de réalisation de l'invention, particulièrement avantageux du fait de sa simplicité, un circuit d'interface tel que décrit ci-dessus est caractérisé en ce que le module de décalage comporte :
. une résistance disposée entre l'entrée de signal et la sortie de signal,
. un troisième comparateur, muni d'une sortie, d'une première entrée destinée à recevoir un signal dit de contrôle ayant une valeur prédéterminée, et d'une deuxième entrée constituant l'entrée de commande du module de décalage, et
. une source de courant variable dont une sortie, reliée à l'une des bornes de la résistance, est destinée à débiter un courant dit de contrôle dont le sens et la valeur sont contrôlées par l'état de la sortie du troisième comparateur.

La correction de la différence entre les valeurs des composantes continues est ainsi aisément réalisée grâce à la génération d'une chute de tension entre la sortie de l'une des branches d'échantillonnage et l'entrée correspondante du soustracteur.

Un circuit d'interface tel que décrit ci-dessus peut être utilisé pour la réception et la remise en forme de tous types de signaux pseudo-périodiques présentant, à chaque pseudo-période, un niveau de référence et un niveau vidéo, et dont il faut extraire l'information utile consistant en la différence entre les dits niveaux. L'invention porte donc également sur une caméra vidéo contenant :
. un dispositif de détection et de conversion de lumière en signaux électroniques analogiques de nature pseudo-périodique,
. un étage d'entrée présentant une entrée destinée à recevoir les dits signaux électroniques analogiques, et une sortie destinée à délivrer un signal analogique dit signal vidéo,
. un dispositif d'amplification présentant une sortie et une entrée destinée à recevoir le signal vidéo, et
. une unité de traitement destinée à exploiter le signal présent à la sortie du dispositif d'amplification,
caractérisée en ce que l'étage d'entrée comporte un circuit d'interface tel que décrit plus haut.

L'invention sera mieux comprise à l'aide de la description suivante de quelques modes de réalisation, faite à titre d'exemple non-limitatif et en regard des dessins annexés, dans lesquels :
- la figure 1 est un ensemble de chronogrammes décrivant l'évolution dans le temps du signal d'entrée du circuit d'interface, ainsi que celle de signaux de validation internes au circuit,
- la figure 2 est un schéma électrique représentant partiellement un circuit d'interface selon l'invention,
- la figure 3 est un schéma électrique représentant partiellement les moyens de contrôle inclus dans un circuit d'interface selon un mode de réalisation avantageux de l'invention, et
- la figure 4 est un diagramme fonctionnel représentant partiellement une caméra vidéo mettant en oeuvre un circuit d'interface selon l'invention.

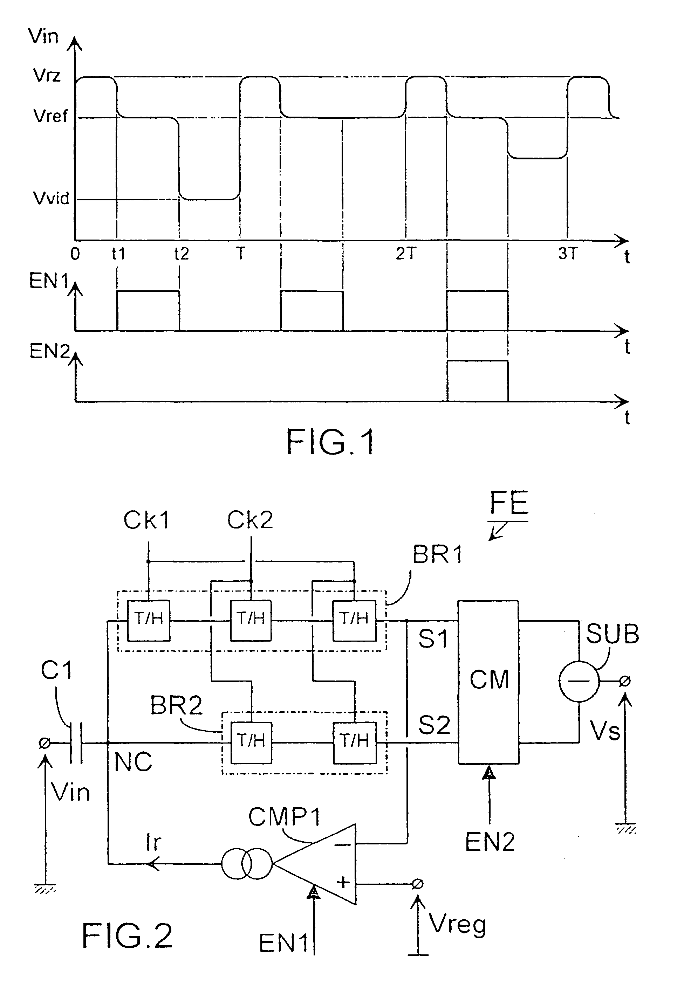

La figure 1 montre l'allure d'un signal d'entrée Vin du circuit d'interface. Au cours de chaque pseudo-période de durée T, ce signal d'entrée Vin présente, successivement, un niveau dit d'initialisation Vrz dont la fonction est d'annoncer le début d'une nouvelle pseudo-période, un niveau dit de référence Vref, qui peut par exemple correspondre au niveau de noir, pendant un premier intervalle de temps [t1; t2], et un niveau dit vidéo Vvid pendant un deuxième intervalle de temps [t2; T]. L'information utile que contient le signal d'entrée Vin est constituée par la différence entre le niveau de référence Vref et le niveau vidéo Vvid. La fonction du circuit d'interface est donc d'extraire un signal représentatif de cette différence depuis le signal d'entrée Vin. Le signal EN1, appelé premier signal de validation, est actif lorsque le signal d'entrée Vin présente un niveau de référence Vref. Le signal EN2, appelé deuxième signal de validation, prend, dans cet exemple, un état actif pendant la troisième pseudo-période car le signal d'entrée Vin a présenté au cours de la pseudo-période précédente un niveau vidéo Vvid égal au niveau de référence Vref. Les signaux de validation EN1 et EN2 sont élaborés sur la base du signal d'entrée Vin par des moyens bien connus du spécialiste. La fréquence du premier signal de validation EN1 est égale à 1/T, puisqu'un niveau actif de EN1 intervient à chaque pseudo-période. La fréquence du deuxième signal de validation EN2 est, elle, nécessairement très inférieure à 1/T car les cas où le niveau vidéo Vvid est égal au niveau de référence Vref sont plus rares.

La figure 2 représente schématiquement un circuit d'interface FE conforme à l'invention. Ce circuit comprend une première et une deuxième branches d'échantillonnage, BR1 et BR2, chacune constituée de suiveurs/bloqueurs T/H disposés en série. Chaque branche BR1 ou BR2 présente une entrée et une sortie constituées respectivement par l'entrée de son premier suiveur/bloqueur T/H et la sortie de son dernier suiveur/bloqueur T/H. Les entrées des première et deuxième branches BR1 et BR2 sont reliées ensemble, formant un noeud commun NC, et sont destinées à recevoir toutes deux le signal d'entrée Vin du circuit d'interface FE. La première branche BR1 contient trois suiveurs/bloqueurs T/H, tandis que la deuxième branche BR2 n'en contient que deux. Les premier et troisième suiveurs/bloqueurs T/H de la première branche BR1, ainsi que le deuxième suiveur/bloqueur T/H de la deuxième branche BR2 sont cadencés par un premier signal d'horloge Ck1, qui est actif pendant le premier intervalle de temps [t1; t2]. Le deuxième suiveur/bloqueur T/H de la première branche BR1, ainsi que le premier suiveur/bloqueur T/H de la deuxième branche BR2, sont cadencés par un deuxième signal d'horloge Ck2, qui est actif pendant le deuxième intervalle de temps [t2; T]. De manière à éviter tout risque de perte d'information, les niveaux actifs des signaux d'horloge Ck1 et Ck2 peuvent être recouvrants. Ainsi, un niveau de référence Vref doit être échantillonné et mémorisé par trois suiveurs/bloqueurs T/H avant de parvenir à la sortie de la première branche d'échantillonnage BR1. Le niveau vidéo Vvid que présente le signal d'entrée Vin au cours de la même pseudo-période ne doit être échantillonné et mémorisé que par deux suiveurs/bloqueurs T/H avant de parvenir à la sortie de la deuxième branche d'échantillonnage BR2. Le niveau vidéo Vvid présentant par rapport au niveau de référence un retard d'une durée égale au premier intervalle de temps [t1; t2], il s'ensuit que les signaux de sortie S1 et S2 des branches d'échantillonnage BR1 et BR2 délivrent simultanément des signaux respectivement représentatifs d'un niveau de référence Vref et d'un niveau vidéo Vvid produits par le signal d'entrée Vin au cours d'une même pseudo-période. Le circuit d'interface FE comprend un soustracteur SUB muni d'une première entrée reliée à la sortie de la première branche BR1, d'une deuxième entrée reliée à la sortie de la deuxième branche BR2, et d'une sortie constituant la sortie du circuit d'interface. Cette sortie délivre un signal Vs, résultant de la différence entre les signaux S1 et S2 présents aux sorties des première et deuxième branches d'échantillonnage BR1 et BR2. Ce signal de sortie Vs est représentatif de la différence entre le niveau de référence Vref et le niveau vidéo Vvid et restitue donc l'information utile que contient le signal d'entrée Vin. Le circuit d'interface FE comprend de plus une boucle de régulation du niveau continu du signal présent aux entrées des branches BR1 et BR2, comportant une première capacité C1 insérée entre le noeud commun NC et l'entrée du circuit d'interface FE, et un premier comparateur CMP1 dont une première entrée est reliée à la sortie de la première branche d'échantillonnage BR1, dont une deuxième entrée reçoit un signal de régulation Vreg ayant une valeur prédéterminée, et dont la sortie commande la conduction d'un courant Ir au travers de la première capacité C1 lorsque le premier signal d'activation EN1 est actif. Cette boucle de régulation a pour fonction de maintenir un niveau continu moyen en entrée des branches d'échantillonnage compatible avec les amplitudes maximales d'admission des suiveurs/bloqueurs. Ce réglage est obtenu en comparant la valeur du signal de sortie S1 de la première branche d'échantillonnage BR1 avec une valeur de seuil fixée par le signal de régulation Vreg. Si la valeur de S1 est inférieure à celle de Vreg, la sortie du comparateur CMP1 commande l'injection d'un courant Ir dans la première capacité C1, dans le but d'augmenter la tension aux bornes de celle-ci, et donc d'augmenter la valeur de la composante continue du signal présent aux entrées des première et deuxième branches BR1 et BR2. Inversement, si la valeur de S1 est supérieure à celle de Vreg, la sortie du comparateur CMP1 commande l'absorption d'un courant Ir depuis la première capacité C1, dans le but de diminuer la tension aux bornes de celle-ci, et donc de diminuer la valeur de la composante continue du signal présent aux entrées des première et deuxième branches BR1 et BR2. Il est bien entendu possible de réaliser une telle régulation du niveau continu en comparant, pendant le deuxième intervalle de temps [t2; T], la valeur du signal de sortie S2 de la deuxième branche BR2 avec une autre valeur de régulation prédéterminée. Les deux branches d'échantillonnage BR1 et BR2 reçoivent un même signal d'entrée dont la valeur moyenne de la composante continue est régulée par la boucle de régulation décrite ci-dessus. Chaque suiveur/bloqueur T/H est susceptible d'introduire un décalage entre le niveau continu du signal qu'il reçoit sur son entrée et celui qu'il délivre sur sa sortie. De plus, le nombre de suiveurs/bloqueurs T/H que traverse le signal d'entrée est différent d'une branche à l'autre. Le circuit d'interface FE comporte donc des moyens de contrôle CM, insérés entre les branches d'échantillonnage, BR1 et BR2, et le soustracteur SUB et activés au moyen du deuxième signal d'activation EN2, c'est-à-dire lorsque les valeurs des signaux de sortie S1 et S2 des première et deuxième branches BR1 et BR2, respectivement représentatives d'un niveau de référence Vref et d'un niveau vidéo Vvid, doivent être égales. Ces moyens de contrôle CM permettent d'ajuster les valeurs des signaux présents aux entrées du soustracteur afin que les dites valeurs soient égales. Ceci permet de compenser tout décalage de tension entre les composantes continues des signaux de sortie S1 et S2 des branches d'échantillonnage BR1 et BR2, qui aurait pour effet de fausser le résultat de la soustraction entre les valeurs des signaux S1 et S2 présents aux sorties des dites branches, ce qui induirait une erreur sur la valeur de l'information utile Vs délivrée en sortie par le circuit d'interface FE.

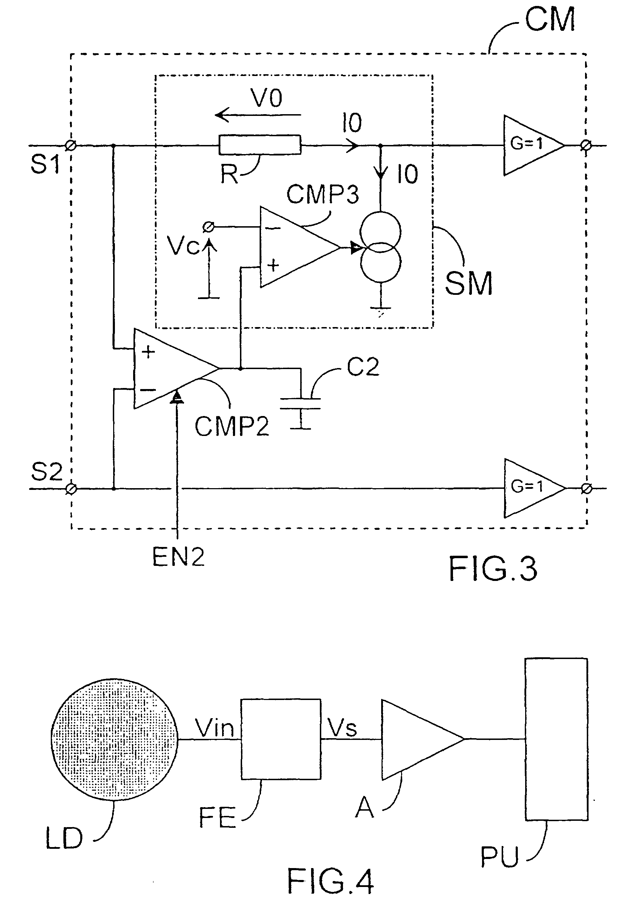

La figure 3 représente schématiquement un mode de réalisation des moyens de contrôle CM. Ces moyens de contrôle comportent un deuxième comparateur CMP2 muni d'une première et d'une deuxième entrées respectivement reliées aux sorties des première et deuxième branches d'échantillonnage BR1 et BR2, et d'une sortie reliée via une deuxième capacité C2 à une borne de tension fixe, constituée dans cet exemple par la masse du circuit. Le comparateur CMP2 effectue la comparaison entre les signaux S1 et S2 délivrés par les sorties des branches d'échantillonnage BR1 et BR2. Si le deuxième signal de validation EN2 est actif, les valeurs de S1 et de S2 doivent, en théorie, être égales puisque toutes deux représentatives d'un même niveau de référence. L'amplitude de l'éventuelle différence entre les valeurs de S1 et S2 est stockée à la sortie du comparateur CMP2 par la deuxième capacité C2. La tension aux bornes de la dite capacité C2 sert à commander un module de décalage CM, dont la fonction est de corriger la différence détectée par le deuxième comparateur CMP2 en générant une différence de potentiel VO, dont la valeur dépend de la valeur de la tension présente aux bornes de la capacité C2, entre la sortie de la première branche BR1 et l'entrée correspondante du soustracteur SUB. Ce module de décalage comporte une résistance R disposée entre la sortie de la première branche BR1 et l'entrée correspondante du soustracteur SUB, à laquelle elle est reliée via un suiveur. Un troisième comparateur CMP3 reçoit sur une première entrée un signal Vc dit de contrôle, ayant une valeur prédéterminée. Une deuxième entrée du dit comparateur CMP3 est reliée à la sortie du deuxième comparateur CMP2. L'autre entrée du soustracteur SUB est reliée, via un autre suiveur, à la sortie de la deuxième branche d'échantillonnage BR2. Le module de décalage SM comporte en outre une source de courant variable dont une sortie, reliée à l'une des bornes de la résistance R, est destinée à débiter un courant IO dit de contrôle. Le sens et la valeur du courant de contrôle IO sont contrôlées par l'état de la sortie du troisième comparateur CMP3. Lorsque, par exemple, la différence entre les valeurs des signaux S1 et S2 présents aux sorties des première et deuxième branches d'échantillonnage BR1 et BR2 est positive et devient supérieure à un seuil déterminé par la valeur du signal de contrôle Vc, la sortie du troisième comparateur commande la conduction d'un courant IO tel que représenté sur la figure 3, provoquant ainsi la création d'une différence de potentiel VO aux bornes de la résistance R qui a pour effet de rendre égales les valeurs des composantes continues des signaux que le soustracteur reçoit sur ses première et deuxième entrées. Ce raisonnement est aisément transposable au cas inverse dans lequel la différence entre les valeurs des signaux S2 et S1 présents aux sorties des deuxième et première branches d'échantillonnage BR2 et BR1 est positive et devient supérieure à un seuil déterminé par la valeur du signal de contrôle Vc, la sortie du troisième comparateur CMP3 commandant alors la conduction d'un courant IO dans un sens opposé à celui représenté sur la figure 3.

Il est par ailleurs tout-à-fait possible, dans une variante du mode de réalisation des moyens de contrôle CM décrit ci-dessus, de relier les entrées du deuxième comparateur CMP2 aux entrées du soustracteur SUB, au lieu de les relier aux sorties des branches d'échantillonnage BR1 et BR2.

La figure 4 représente schématiquement une caméra vidéo dans laquelle est mise en oeuvre l'invention. Cette caméra vidéo comporte :
. un dispositif LD de détection et de conversion de lumière en signaux électroniques Vin analogiques de nature pseudo-périodique,
. un étage d'entrée présentant une entrée destinée à recevoir les dits signaux électroniques analogiques Vin, et une sortie destinée à délivrer un signal analogique Vs dit signal vidéo,
. un dispositif d'amplification A présentant une sortie et une entrée destinée à recevoir le signal vidéo Vs, et
. une unité de traitement PU destinée à exploiter le signal présent à la sortie du dispositif d'amplification .

L'étage d'entrée de cette caméra vidéo comporte un circuit d'interface FE tel que décrit plus haut. En effet, les signaux électroniques analogiques Vin issus du dispositif de détection Vin ayant une allure semblable à celle représentée à la figure 1, un tel circuit d'interface permet une élaboration précise du signal vidéo destiné à être exploité par l'unité de traitement PU après amplification.

## Revendications

1. Circuit d'interface muni d'une entrée destinée à recevoir un signal d'entrée (Vin) pseudo-périodique dont chaque pseudo-période comprend au moins un premier et un deuxième intervalles de temps consécutifs, signal d'entrée présentant un niveau dit de référence pendant le premier intervalle de temps et un niveau dit vidéo pendant le deuxième intervalle de temps, et d'une sortie (Vs) destinée à délivrer un signal dont le niveau est représentatif de la différence entre le niveau de référence et le niveau vidéo pris par le signal d'entrée au cours d'une même pseudo-période, circuit d'interface comprenant :
. une première (BR1) et une deuxième branches d'échantillonnage (BR2), chacune constituée de suiveurs/bloqueurs (T/H) disposés en série, chacun muni d'une entrée et d'une sortie, chaque branche présentant une entrée et une sortie constituées respectivement par l'entrée de son premier suiveur/bloqueur et la sortie de son dernier suiveur/bloqueur, la première branche contenant un suiveur/bloqueur de plus que la deuxième, l'entrée de chaque branche recevant le signal d'entrée du circuit d'interface,
. un soustracteur (SUB) muni d'une première entrée reliée à la sortie de la première branche, d'une deuxième entrée reliée à la sortie de la deuxième branche, et d'une sortie constituant la sortie du circuit d'interface,
. une boucle de régulation de niveau continu (CMP1, Vreg) comportant une première capacité (C1) inserée entre l'entrée de l'une des branches et l'entrée du circuit d'interface, et un premier comparateur (CMP1) muni d'une première entrée reliée à la sortie de l'une des branches d'échantillonnage, d'une deuxième entrée destinée à recevoir un signal de régulation (Vreg) ayant une valeur prédéterminée, et d'une sortie destinée à commander la conduction d'un courant au travers de la première capacité,
le circuit d'interface étant tel que les entrées des première et deuxième branches sont reliées ensemble, formant un noeud commun relié via la première capacité à l'entrée du circuit d'interface, et comportant en outre des moyens de contrôle (CM). insérés entre les branches d'échantillonnage et le soustracteur, et activés si les niveaux des signaux présents aux sorties des première (S1) et deuxième branches (S2) correspondent au niveau de référence, moyens de contrôle (CMP2, C2, CMP3, R) permettant d'ajuster les valeurs des signaux présents aux entrées du soustracteur (SUB) afin que les dites valeurs soient égales.

2. Circuit d'interface selon la revendication 1, **caractérisé en ce que** les moyens de contrôle comportent
. un deuxième comparateur (CMP2) muni d'une première et d'une deuxième entrées respectivement reliées aux sorties des première (S1) et deuxième branches d'échantillonnage (S2), et d'une sortie reliée via une deuxième capacité (C2) à une borne de tension fixe, et
. un module dit de décalage, muni d'une entrée de signal reliée à la sortie de l'une des branches d'échantillonnage, d'une sortie de signal reliée à l'une des entrées du soustracteur dont l'autre entrée est reliée à la sortie de l'autre branche d'échantillonnage, le module de décalage étant en outre muni d'une entrée de commande reliée à la sortie du deuxième comparateur (CMP2) et etant destiné à générer, entre son entrée de signal et sa sortie de signal, une différence de potentiel dont la valeur dépend de la valeur du signal reçu sur l'entrée de commande.

3. Circuit d'interface selon la revendication 2, **caractérisé en ce que** le module de décalage comporte :
. une résistance (R) disposée entre l'entrée de signal et la sortie de signal,
. un troisième comparateur (CMP3), muni d'une sortie, d'une première entrée destinée à recevoir un signal dit de contrôle ayant une valeur prédéterminée, et d'une deuxième entrée constituant l'entrée de commande du module de décalage, et
. une source de courant variable dont une sortie, reliée à l'une des bornes de la résistance, est destinée à débiter un courant dit de contrôle dont le sens et la valeur sont contrôlées par l'état de la sortie du troisième comparateur.

4. Caméra vidéo contenant :
. un dispositif de détection et de conversion de lumière en signaux électroniques analogiques de nature pseudo-périodique (LD),
. un étage d'entrée (FE) présentant une entrée destinée à recevoir les dits signaux électroniques analogiques, et une sortie destinée à délivrer un signal analogique dit signal vidéo,
. un dispositif d'amplification (A) présentant une sortie et une entrée destinée à recevoir le signal vidéo, et
. une unité de traitement (PU) destinée à exploiter le signal présent à la sortie du dispositif d'amplification,
**caractérisée en ce que** l'étage d'entrée comporte un circuit d'interface conforme à l'une quelconque des revendications 1 à 3.

## Patentansprüche

1. Schnittstellenschaltung mit einem Eingang für den Erhalt eines pseudoperiodischen Eingangssignals (Vin), von dem jede Pseudo-Periode mindestens ein erstes und ein zweites aufeinanderfolgendes Zeitintervall enthält, ein Eingangssignal mit einem so genannten Referenzniveau während dem ersten Zeitintervall und einem so genannten Videoniveau während dem zweiten Zeitintervall und einem Ausgang (Vs) für die Ausgabe eines Signals, dessen Niveau für den Unterschied zwischen dem Referenzniveau und dem Videoniveau darstellend ist, das vom Eingangssignal im Laufe einer selben Pseudo-Periode genommen wurde, eine Schnittstellenschaltung mit:
. einem ersten (BR1) und einem zweite Abtastzweig (BR2), jeweils gebildet aus in Serie angeordneten Folge/Halte-Schaltungen (T/H), jeweils mit einem Eingang und einem Ausgang ausgestattet, wobei jeder Zweig einen Eingang und einen Ausgang aufweist, respektive von dem Eingang seiner ersten Folge/Halte-Schaltung und dem Ausgang seiner letzten Folge/Halte-Schaltung gebildet, der erste Zweig eine Folge/Halte-Schaltung mehr als der zweite enthält und der Eingang jedes Zweigs das Eingangssignal der Schnittstellenschaltungerhält,
. einem Subtrahierer (SUB), ausgestattet mit einem ersten Eingang, verbunden mit dem Ausgang des ersten Zweigs, einem zweiten Eingang, verbunden mit dem Ausgang des zweiten Zweigs, und einem Ausgang, welcher den Ausgang der Schnittstellenschaltungbildet,
. einer Gleichstromniveau-Regelschleife (CMP1, Vreg) mit einer ersten Kapazität (C1), eingefügt zwischen den Eingang des einen Zweigs und den Eingang der Schnittstellenschaltung, und einem ersten Vergleicher (CMP1), ausgestattet mit einem ersten Eingang, verbunden mit dem Ausgang eines Abtastzweigs, einem zweiten Eingang, bestimmt für den Erhalt eines Regelsignals (Vreg) mit einem vorbestimmten Wert, und einem Ausgang, bestimmt für die Steuerung der Leitung eines Strom durch die erste Kapazität,
wobei die Schnittstellenschaltung derart ist, dass die Eingänge des ersten und zweiten Zweigs miteinander verbunden werden, um einen gemeinsamen Knoten zu bilden, über die erste Kapazität mit dem Eingang der Schnittstellenschaltungverbunden, und außerdem Steuermittel (CM) enthält, die zwischen die Abtastzweige und den Subtrahierer eingefügt sind und aktiviert werden, wenn die an den Ausgängen des ersten (S1) und zweiten Zweigs (S2) vorhandenen Signalniveaus dem Referenzniveau entsprechen, und die Steuermittel (CMP2, C2, CMP3, R) es ermöglichen die Werte der an den Eingängen des Subtrahierers (SUB) vorhandenen Signale anzupassen, damit die besagten Werte gleich sind.

2. Schnittstellenschaltung nach Anspruch 1, **dadurch gekennzeichnet, dass** die Steuermittel enthalten:
. Einen zweiten Vergleicher (CMP2), ausgestattet mit einem ersten und einem zweiten Eingang, respektive mit den Ausgängen des ersten (S1) und zweiten Abtastzweigs (S2) verbunden, und einem Ausgang, über eine zweite Kapazität (C2) mit einer Klemme fester Spannung verbunden, und
. einem so genannten Versetzungmodul, ausgestattet mit einem Signaleingang, verbunden mit dem Ausgang einer der Abtastzweige, einem Signalausgang, verbunden mit einem der Eingänge des Subtrahierers, dessen anderer Eingang mit dem Ausgang des anderen Abtastzweigs verbunden ist, wobei das Versetzungsmodul außerdem mit einem Steuereingang ausgestattet ist, verbunden mit dem Ausgang des zweiten Vergleichers (CMP2) und dafür bestimmt, zwischen seinem Signaleingang und seinem Signalausgang eine Potenzialdifferenz zu bilden, deren Wert vom Wert des am Steuerungeingang erhaltenen Signals abhängt.

3. Schnittstellenschaltung nach Anspruch 2, **dadurch gekennzeichnet, dass** das Versetzungsmodul enthält:
. Einen zwischen den Signaleingang und den Signalausgang angeordneten Widerstand (R),
. einen dritten Vergleicher (CMP3), ausgestattet mit einem Ausgang, einem ersten Eingang, bestimmt für den Erhalt eines so genannten Steuersignals mit einem vorbestimmten Wert, und einem zweiten Eingang, welcher den Steuereingang des Versetzungsmoduls bildet, und
. einer variablen Stromquelle, von der ein Ausgang, verbunden mit einer der Klemmen des Widerstands, dafür bestimmt ist, einen so genannten Steuerstrom abzugeben, dessen Richtung und Wert nach dem Zustand des Ausgangs des dritten Vergleichers gesteuert werden.

4. Videokamera mit:
. Einer Anordnung zur Detektion und Konversion von Licht in analoge elektronische Signale pseudo-periodischer Art (LD),
. einer Eingangsstufe (FE) mit einem Eingang für den Erhalt der besagten analogen elektronischen Signale und einem Ausgang für die Ausgabe eines analogen Signals mit der Bezeichnung Videosignal,
. einer Verstärkeranordnung (A) mit einem Ausgang und einem Eingang für den Erhalt des Videosignals, und
. einer Verarbeitungseinheit (PU) zur Nutzung des am Ausgang der Verstärkeranordnung vorhandenen Signals,
**dadurch gekennzeichnet, dass** die Eingangsstufe eine Schnittstellenschaltung entsprechend einem beliebigen der Ansprüche 1 bis 3 enthält.

## Claims

1. An interface circuit having an input intended to receive a pseudo-periodical input signal (Vin), each pseudo-period of which comprises at least a first and a second consecutive time interval, said input signal having a reference level during the first time interval and a video level during the second time interval, and an output (Vs) intended to supply a signal having a level which is representative of the difference between the reference level and the video level assumed by the input signal in the course of one and the same pseudo-period, said interface circuit comprising:
. a first (BR1) and a second (BR2) sampling branch each constituted by series-arranged track-and-hold circuits (T/H), each having an input and an output, each branch having an input and an output constituted by the input of its first track-and-hold circuit and the output of its last track-and-hold circuit, respectively, the first branch comprising one sample-and-hold circuit more than the second, the input of each branch receiving the input signal from the interface circuit,
. a subtracter (SUB) having a first input connected to the output of the first branch, a second input connected to the output of the second branch and an output constituting the output of the interface circuit,
. a DC level control loop (CMP1, Vreg) comprising a first capacitance (C1) arranged between the input of one of the branches and the input of the interface circuit, and a first comparator (CMP1) having a first input connected to the output of one of the sampling branches, a second input intended to receive a regulation signal (Vreg) having a predetermined value and an output intended to control the conduction of a current through the first capacitance,
the interface circuit being such that the inputs of the first and second branches are interconnected, forming a junction point connected via the first capacitance to the input of the interface circuit, and also comprising control means (CM) arranged between the sampling branches and the subtracter, which means are activated when the levels of the signals at the outputs of the first (S1) and second (S2) branches correspond to the reference levels, said control means (CMP2, C2, CMP3, R) allowing adjustment of the values of the signals at the inputs of the subtracter (SUB) in order that said values are equal.

2. An interface circuit as claimed in claim 1, **characterized in that** the control means comprise:
. a second comparator (CMP2) having a first and a second input connected to the outputs of the first (S1) and second (S2) sampling branches, respectively, and an output connected via a second capacitance (C2) to a fixed voltage terminal, and
. an offset module having a signal input connected to the output of one of the sampling branches, a signal output connected to one of the inputs of the subtracter, the other input of which is connected to the output of the other sampling branch, the offset module also having a control input connected to the output of the second comparator (CMP2) and being intended to generate, between its signal input and its signal output, a potential difference whose value depends on the value of the signal received at the control input.

3. An interface circuit as claimed in claim 2, **characterized in that** the offset module comprises:
. a resistor (R) arranged between the signal input and the signal output,
. a third comparator (CMP3) having an output, a first input intended to receive a control signal having a predetermined value and a second input constituting the control input of the offset module, and
. a variable current source having an output connected to one of the terminals of the resistor and being intended to supply a control current whose direction and value are controlled by the state of the output of the third comparator.

4. A video camera comprising:
. a device (LD) for detecting and converting light into analog electronic signals of a pseudo-periodical kind,
. an input stage (FE) having an input intended to receive said analog electronic signals, and an output intended to supply an analog video signal,
. an amplifier device (A) having an output and an input intended to receive the video signal, and
. a processing unit (PU) intended to process the signal at the output of the amplifier device,
**characterized in that** the input stage comprises an interface circuit as claimed in any one of claims 1 to 3.
